# EUROPEAN PATENT SPECIFICATION

(11) **EP 1 256 656 B1**
(45) Date of publication and mention of the grant of the patent: **25.08.2004**
(21) Application number: 01250325.6
(22) Date of filing: 17.09.2001
(51) Int. Cl.: E01C 19/10, C08L 95/00, E01C 7/24

(54) **Process and apparatus for producing mixture for asphalt pavement and method for paving roads by use thereof**
Verfahren und Vorrichtung zur Herstellung eines bituminösen Mischgutes und Verfahren zur Herstellung einer Strassendecke damit
Procédé et dispositif de fabrication d'un enrobé bitumineux et procédé de pavage avec cet enrobé

(30) Priority: 08.05.2001 JP 2001136876
(43) Date of publication of application: 13.11.2002
(73) Proprietor: Sansei Chemical Industry Co., Ltd., Kanazawa-shi, Ishikawa 920-0356 (JP)
(72) Inventor: Isozaki, Yuko, Saitama 351-0104 (JP)
(74) Representative: Hengelhaupt, Jürgen D., Dipl.-Ing.

(56) References cited:
- DE-A- 3 703 775
- GB-A- 1 209 449
- US-A- 2 012 496
- US-A- 4 331 481
- PATENT ABSTRACTS OF JAPAN vol. 2000, no. 10, 17 November 2000 (2000-11-17) & JP 2000 186151 A (TAKEMURA AKIRA), 4 July 2000 (2000-07-04) & US 6 238 082 A (TAKEMURA) 29 May 2001 (2001-05-29)

## Description

### BACKGROUND OF THE INVENTION

### Field of the Invention

The present invention relates to a process for producing a mixture for asphalt pavement, and more particularly to a process for producing a mixture applicable for asphalt pavement with a smaller amount of carbon dioxide being produced to thereby be environment-friendly and at lower energy costs.

### Description of the Related Art

Today, attention is paid to porous pavements or drainage pavements as asphalt pavement. In case of porous pavements, rainwater passes through the air voids of a pavement body to penetrate up to the subgrade lying just therebelow, whereas in case of drainage pavements, rainwater, after passing through the surface course, under which a water-repellent course is provided, flows thereon into the gutters provided along the shoulders or sides of the road. Therefore, as far as the surface course of asphalt is concerned, porous pavements and drainage pavements are alike each other.

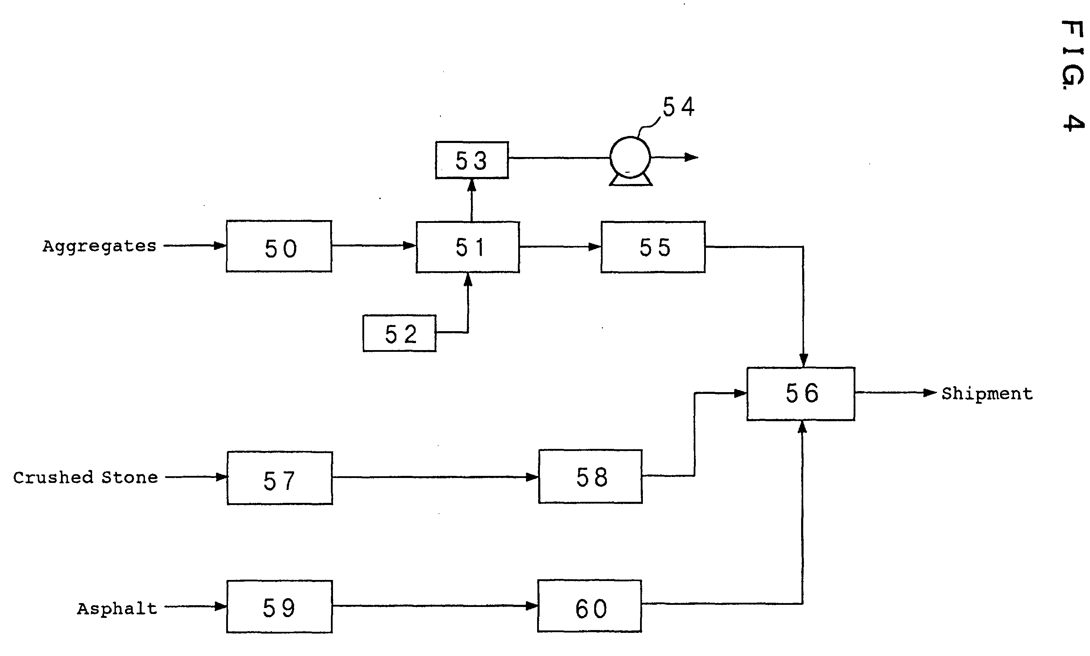

A conventionally known mixture for asphalt pavement is produced from aggregates, crushed stone powder and asphalt serving as raw materials, and the mixture for either a porous pavement or a drainage pavement contains too smaller an amount of fine aggregates and too larger an amount of coarse aggregates and in addition, too smaller an amount of asphalt to be consumed than a mixture for general asphalt pavement to thereby have too high a void content in pavement. A conventional process for producing mixture is described using Fig. 4.

The aggregates stored in a storage tank 50 for aggregates such as macadam and sand is fed to a dryer 51, where they are preheated to 155°C to improve dispersion with hot asphalt. A heavy oil burner 52 is used to preheat the aggregates in the dryer 51, whereas an exhaust fan 54 is used for discharging gas, which is discharged after passing a dust collector 53. The preheated aggregates are separated by a vibrating sieve and fed to a mixer 56 after measured by a measuring tank 55. A crashed stone powder is fed to the mixer 56 after measured by the measuring tank 58 from a crushed stone powder tank 57. The hot asphalt (about 160°C) is fed from an asphalt pit 59 to another measuring tank 60, then fed to the mixer 56 after measured. The raw materials comprising aggregates, crushed stone powder and hot asphalt are agitated by the mixer 56 to thereby obtain a mixture.

In the conventional process, aggregates are essentially preheated to 155°C, requiring a heavy oil storage tank, an igniter, a combustion controller, a combustion stabilizer and other facilities to be provided, and in addition if a dust collector is provided, it requires to provide a power supply facility, a safety device, a control panel and other facilities to thereby call for a significant amount of cost for preheating.

Further the conventional process uses heavy oil burners to preheat the aggregates to 155°C, therefore it does not only require heavy oil costs, but also causes environmental problems such as global warming by discharging carbon dioxide (hereinafter called "CO₂", if necessary).

Meanwhile, today, recycled aggregates coming out of used asphalt pavements are being given a trial as a raw material of a mixture. This means to reuse, as aggregates for a mixture, materials obtained by the crushing and screening of asphalt mixtures which have been stripped and recovered from surface courses or base courses of asphalt pavements, or asphalt-stabilized materials for subbase courses. However, the use of the thus-recycled aggregates can produce odor or toxic substances when preheated to 155°C if they contain foreign substances or rubber such as chloroprene rubber to thereby make the recycled aggregates useless.

DE 37 03 775 A1 describes a process for recycling of asphalt which is environment-friendly. The process comprise the mixing of reclaimed asphalt granulate material and a bitumen emulsion whereby the heating temperature is preferred between 70 and 80°C.

### SUMMARY OF THE INVENTION

In view of the foregoing, an object of the present invention is to provide a process for producing a mixture for asphalt pavement, which may reduce equipment costs, hold down generation of carbon dioxide gas to be, therefore, environmentally friendly, reduce energy costs and allow recycled aggregates to be reusable, and which can be used for paving roads.

While an object of the present invention is as described hereabove, it will be understood that it is not intended to limit the objects of the present invention to it. On the contrary it is intended to cover all alternatives, modifications and equivalents as may be included within the scope of the present invention defined by the claims.

### BRIEF DESCRIPTION OF THE DRAWINGS

Fig. 1 is a block diagram showing an embodiment of the process for producing the mixture in the present invention.
Fig. 2 is a sectional view of a main portion of a mill used in the present invention.
Fig. 3 is a sectional view of a main portion of a mill used in the present invention.
Fig. 4 is a block diagram of a conventional example.

### DESCRIPTION OF THE INVENTION AND PREFERRED EMBODIMENTS

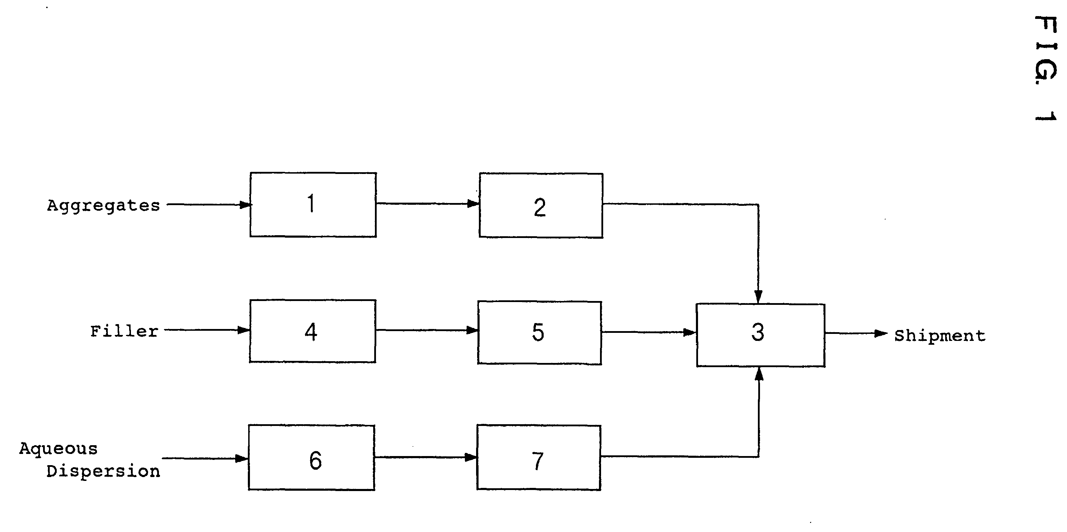

Firstly, an embodiment of the process for producing the mixture under the present invention is described according to Fig. 1. Referring to Fig. 1, numeral 1 denotes an aggregate feeding means. The said aggregate feeding means 1 has a storage part which stores aggregates comprising macadam, coarse sand, fine sand, recycled aggregates and the like and a means to convey the aggregates stored in the storage part. The aggregates, which are fed by the said aggregate feeding means, are separated by a vibrating sieve, if necessary, then fed to a measuring part 2, and after measured, are fed to a mixer 3. Recycled aggregates are also fed to the aggregate feeding means 1 in the same manner as ordinary aggregates are fed.

A filler material is fed from a filler feeding means 4 to a measuring part 5, then after measured, fed to the mixer 3.

Typical cement used as the filler material is Portland cement, and it can be added in larger quantity or can be replaced by high-early-strength cement or ultra high-early-strength cement in order to advance the start of putting an asphalt-paved road into service. Cement group and lime group (quick lime and slaked lime) may either be fed to the filler feeding means 4 at a predetermined rate of mixture with crushed stone powder or be thrown directly into the mixer in the amount measured individually.

Numeral 6 denotes an aqueous asphalt dispersion feeding means. It comprises a tank to store the aqueous asphalt dispersion, a feed pump and others. The aqueous dispersion fed by the aqueous asphalt dispersion feeding means 6 is sent to a measuring part 7, and then, after measured, is conveyed to the mixer 3.

The raw materials comprising aggregates (which may be inclusive of recycled aggregates), filler and aqueous asphalt dispersion are agitated and mixed by the mixer 3 to thereby obtain the mixture.

One of the characteristics of the above-described process is that it does not adopt any such means to preheat aggregates as is conventionally required at all. The fact that the aggregates are fundamentally without being preheated means to omit any facility related to preheating the aggregates to thereby reduce equipment costs. Furthermore, it can restrain generation of carbon dioxide to be, therefore, environmentally friendly as well as reduce energy costs.

For the purpose of the present invention an embodiment of complete exclusion of preheating is given.

Another characteristic of the above-described process is that it works effectively in producing amixture for either porous pavements or drainage pavements. Porous pavements and drainage pavements are both used mainly for sidewalks or roads that have relatively a small amount of traffic. Those roads will possibly have a problem of aggregate exfoliation because they contain a smaller amount of fine aggregates, and further, a smaller amount of asphalt used as binder in order to secure more air voids. In the present invention, the use of the aqueous asphalt dispersion will get a stronger bond stress than the use of hot asphalt as binder. The aqueous asphalt dispersion will have a further effect, depending on how cement group is used. A small amount of the aqueous mixture is enough, so that increase in cost is smaller in case of the present invention than in case of the conventional hot asphalt methods.

Another characteristic of the said process is that an aqueous asphalt dispersion comprising asphalt and poval is used as asphalt group. The use of such aqueous dispersion allows non-preheated aggregates to be mixed sufficiently without dispersion failure.

Recycled aggregates may generally contain various kind of foreign matters such as litter in air voids and chlorides used for paving. If heated to 155°C, they may inevitably produce odor or hazardous substances. This kind of trouble may also occur during paving works, having an adverse effect on neighboring inhabitants. In the present invention, recycled aggregates are utilized at ambient temperature, so that this kind of trouble will not occur. In addition, residual asphalt can be reused, because the aqueous mixture is easy to adhere to residual asphalt, resulting in obtainment of desired pavement strength even with a smaller amount of aqueous dispersion to contribute to a cost saving.

The aqueous asphalt dispersion used in the present invention consists of asphalt and poval.

In the present invention, the aqueous asphalt dispersion is preferably produced by way of rotating at high speed a mixing apparatus comprising a rotational body and a non-rotational body forming a predetermined distance therebetween or a mixing apparatus comprising two rotational bodies forming a predetermined distance therebetween, to which distance the asphalt serving as raw material that is melted in advance so as to assume a liquid state and an aqueous poval solution are fed. Further details are described hereinafter and can be seen in US Patent 6238082 (TAKEMURA).

To produce the aqueous asphalt dispersion poval is added preferably at the rate of 0.5 - 5 wt. % to the asphalt with the amounts of both the poval and the asphalt being on a solid basis. In consideration of minimum consumption of emulsifier for producing the aqueous asphalt dispersion, the rate is preferably 0.5% or more, while in consideration of obtaining a stable aqueous asphalt dispersion, it is preferably around 5%, and in the viewpoint of potential rise in viscosity and cost factor, 5% or less is preferable.

Concentration of the solid portion of the aqueous dispersion is preferably in the range of 35% to 75%, and more preferably 50% to 65%. 50% is the best for the stability of aqueous dispersion, however, in order to avoid too much moisture, which has to be removed, the concentration is preferably 35% or more, whereas in consideration that an aqueous dispersion type asphalt emulsion cannot remain aqueous dispersion at a higher concentration, 75% or less is preferable.

To speed up evaporation of moisture in the aqueous asphalt dispersion, the aqueous asphalt dispersion is preferably mixed with hot asphalt. Such blending is preferably made after the aqueous asphalt dispersion is mixed with aggregates and filler. It aims to prevent a bumping which might occur when mixing was made simultaneously.

After mixing the aggregates and the filler with the aqueous asphalt dispersion, hot asphalt is preferably mixed at the rate of 50 wt. % or less to the aqueous asphalt dispersion with the amounts of both the hot asphalt and the dispersion being on a solid basis. This is to avoid an adverse effect of bumping that may occur when the moisture in the aqueous asphalt dispersion contacts the hot asphalt.

The filler used in the present invention fills gaps such as those between coarse aggregates and fine aggregates to thereby reduce the required quantity of asphalt and improve the stability and aging resistivity of asphalt mixture. Crushed stone powder is an example used as the filler. The crushed stone powder is preferably made by way of crushing limestone or igneous rock.

Furthermore, in the present invention, the filler is preferably mixed with cement group or lime group to speed up the reaction of asphalt with poval and accelerate the hardening of the aqueous asphalt dispersion. Such lime is preferably made of quick lime or slaked lime in order to further accelerate the hardening.

The most preferable way to raise the aqueous asphalt dispersion hardening acceleration is to add cement. Besides ordinary Portland cement, high-early-strength cement or ultra high-early-strength cement can be used as cement group.

The aqueous asphalt dispersion used in the present invention is preferably obtained from asphalt serving as raw material melted in advance to assume a liquid state and an aqueous poval solution, and preferred examples of the asphalt serving as raw material include petroleum asphalt (e.g. straight asphalt and blown asphalt), bitumen and tar; and substances such as polyethylene, polypropylene, butadiene resin, polystyrene, vinyl chloride, ethylene vinyl acetate, petroleum resin, paraffin wax, methacryl resin, AS resin and ABS resin may be used in combination with one another.

The aqueous poval solution used in the present invention has a degree of polymerization of 300 - 3,000, preferably 500 - 2,000, and a degree of saponification of 70 - 98, preferably 80 - 90.

In consideration of workability and production of a high-concentration dispersion, the concentration of poval is preferably around 10 wt.%. When poval is used at such a concentration, the dispersion may be produced in a few minutes, to thereby advantageously reduce production time.

When an aqueous poval solution is used as an emulsifier, an emulsion of the present invention may be produced, but in order to reduce particle size and to homogenize the emulsion, a surfactant is preferably used in combination with the aqueous poval solution. Examples of surfactants which may be used include cationic surfactants, anionic surfactants and nonionic surfactants.

The aqueous dispersion used in the present invention is preferably produced by use of a mixing apparatus comprising a rotational body and a non-rotational body. In a more preferred embodiment of the prevent invention, a mill is used in which the rotational body and the non-rotational body are disposed oppositely, and a protrusion is formed on at least one of the surfaces of the bodies, and said rotational body and non-rotational body are of disk-type, and are oppositely disposed such that the rotational body serving as a rotor and the said protrusion of the non-rotational body serving as a stator form a concavo-convex shape along the circumferences, and the circumferential portion of a body having a protrusion and the circumferential portion of the other body having no protrusion are engaged with each other to secure a rotation, and the mixing apparatus with a narrow distance between the said rotor and stator forming the concavo-convex shape and being engaged with each other.

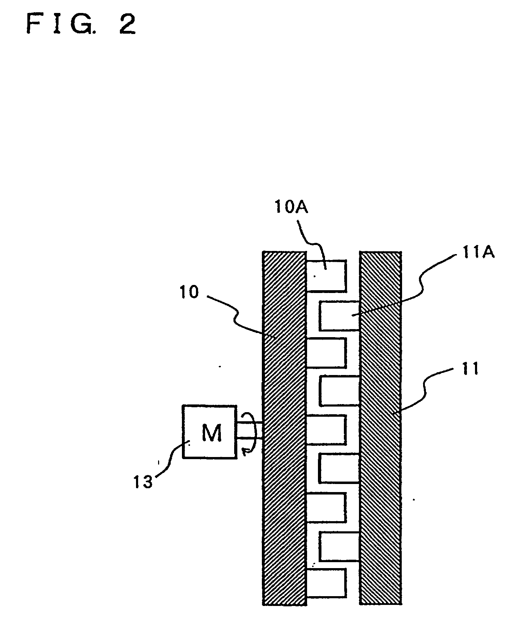

Fig. 2 shows a situation in which the rotor and stator are oppositely disposed and engaged with each other, leaving a space therebetween. The rotor and the stator are preferably used in the present invention. In Fig. 2, numeral 10 denotes the rotor and numeral 2 denotes the stator. The rotor 10 is provided with teeth 10A which represent protrusions on the surface of the rotor 10, and in the same way, stator 11 is provided with teeth 11A. In Fig. 2, numeral 13 denotes a motor for the rotor 10. The teeth 10A and the teeth 11A may be aligned concentrically on the surfaces of the rotor 10 and stator 11. The number of the teeth is not limited to that shown in Fig. 2.

The distance between the rotor 10 and the stator 11 or between the teeth 10A and 11A is preferably 0.05 - 1.0 mm, more preferably about 0.3 mm. A more narrow distance has the effect of destroying the dispersion, whereas a wider distance yields a dispersion of coarser particle size.

When a raw material and an aqueous poval solution are fed to the mill, the pressure applied thereto is preferably 1 - 10 kgf/cm², more preferably 4 kgf/cm². Lower pressure yields a dispersion of coaster particle size, whereas higher pressure has the effect of destroying the dispersion.

A mill used in the present invention preferably comprises the rotor and the stator forming a concavo-convex shape on their surfaces oppositely disposed, and such concavo-convex shape preferably assumes a form of teeth.

Asphalt serving as raw material melted to assume a liquid state and an aqueous poval solution are fed into the narrow space defined in the mill, and the rotor 10 is rotated at high speed to thereby produce an aqueous dispersion in a continuous manner.

The rotation speed of the rotor 10 is preferably 500 - 10,000 rpm, more preferably about 6,000 rpm. The lower the rotation speed is, the coarser the particle size of the dispersion becomes.

When the mixture produced accordingly is used on the surface of a pavement, the hardening speed of the aqueous dispersion is preferably accelerated in order to put the asphalt pavement into service as soon as possible. The primary means to realize such acceleration is to preheat the surface of the pavement in question by use of, for example, the flare of a burner and the like.

Furthermore, in lieu of or in combination with the above-described, boric acid or an aqueous solution of borax is mixed with the aqueous asphalt dispersion, or boric acid or an aqueous solution of borax is sprayed on the surface of the pavement in question. Any of these means may be used singly or in combination with one another.

### EXAMPLES

The present invention will next be described in more detail by way of examples, which should not be construed as limiting the invention thereto.

### Comparison 1

### (Raw material of mixture)

The following ① aggregates, ② filler, and ③ asphalt group were used as raw materials of the mixture:
① Aggregates:
The aggregates comprising the following components were heated to 155°C by use of a heavy oil burner and a drier:
Composition of aggregates:

| Coarse aggregates: | maximum particle size: 20 mm | |
|---|---|---|
| particle size | 19.0 mm or more | 3 wt. % |
| | 13.2 mm or more | 10 wt. % |
| | 4.75 mm or more | 32 wt. % |

| Fine aggregates: | maximum particle size: 4.75 mm | |
|---|---|---|
| particle size | 2.36 mm or more | 13 wt. % |
| | 0.6 mm or more | 18wt.% |
| | 0.3 mm or more | 8 wt. % |
| | 0.15 mm or more | 5 wt. % |

② Filler:
Crushed stone powder, slaked lime and cement were used as filler.
③ Asphalt group:
Straight asphalt with penetration of 60-80 was heated to 160°C and used as hot asphalt.

### (Composition of mixture)

| | |
|---|---|
| Aggregates coarse aggregates | 45wt.% |
| fine aggregates | 44 wt. % |
| Filler pulverized limestone (stone powder) | 3 wt. % |
| slaked lime | 1 wt. % |
| cement | 1 wt. % |
| Hot asphalt | 6 wt. % |
| Total | 100 wt. % |

### (Process for producing the mixture)

The materials having the aforementioned composition were put in a batch type mixer and mixed therein. More particularly, the aggregates and the filler were given dry mixing for 5 seconds, and then, the hot asphalt was poured therein, and mixed for 40 seconds.

### (Shipment and application of the mixture)

The thus-obtained mixture was loaded on a dump truck at the outlet of the mixer, and after covered with a sheet on the load-carrying platform, conveyed to a site, and applied for an asphalt pavement.

A 50 mm thick surface course was the object of the asphalt pavement. For the pavement work, tack coat was sprayed evenly on the base course, which lies 50 mm below the surface course, by 50 liter/m², then, spread by use of an asphalt finisher to thereby obtain a level. Thereafter, the said mixture was spread throughout before it got cooler than 110°C, and subsequently, compacted by use of a compacting roller and a tire roller.

### (Evaluation)

① Appearance evaluatiom of the paving:
   The surface of the pavement provided is visually evaluated according to the following criteria and its results are shown in Table 1:
   - ⓞ:: Good
   - ○:: Relatively good
   - Δ:: Relatively bad
   - ×:: Bad
② The thus-obtained mixture is measured in respect of density, void content, voids filled with asphalt, stability, flow value according to the Marshall stability test as described below, and its results are shown in Table 2.

### [Marshall stability test]

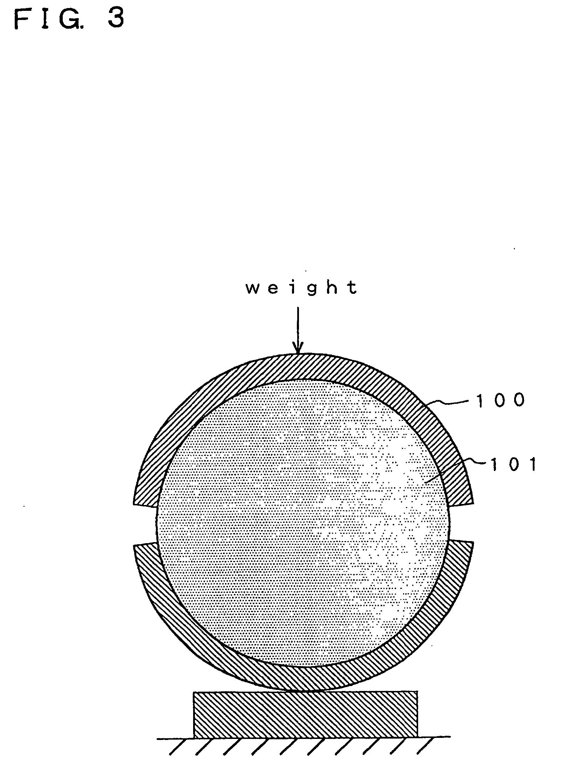

The test is performed in the way where a test specimen 101 comprising compacted and solidified mixture containing aggregates having particle sizes of 25 mm or less is compressed in a 101.6 mm inside dia. mold 100 in the direction of diameter, as shown in Fig. 3. The mixture is compacted as often as predetermined both at the top and bottom surfaces through the round lids by use of a 4.5 kg hammer freely falling from the height of 45.7 cm to thereby be solidified and form a test specimen having the height of 63.5 cm ±1.3 mm.

The test specimen 101, after compacted and solidified, is pulled out from the mold 100, and left standing for 12 hours or more at ambient temperature, then, measured in respect of density and thickness thereof to calculate the density, void content and voids filled with asphalt thereof.

Thereafter, the test specimen 101 is put in a water tank with water of 60°C ± 1°C for 30 - 40 minutes, then, compressed for a test by means of a loading apparatus in the direction of diameter of the test specimen at a constant deforming speed of 50 ± 5 mm per minute. The test shall be finished within 30 seconds, and attention shall be paid not to allow the temperature of the test specimen 101 to change far from 60°C. The maximum load at this point is called the Marshall stability, or simply called stability, shown in the unit of kg.

As a countermeasure for flowage, 75 times or more of compacting and solidifying, and the stability of 750 kg or more are targeted. The deformation at the point of the maximum load is shown in the unit of 1/100 cm and called flow value.

### (Evaluation of CO₂ inhibiting effect)

Table 3 shows the result of the evaluation.

### Example 1

The following were used as the raw materials of the mixture:
① Aggregates: The aggregates of the same composition as used in Comparison 1 were used at ambient temperature without being preheated.
② Filler: Crushed stone powder, slaked lime and cement were used.
③ Asphalt group: The aqueous asphalt dispersion (Alfa-Sol-4, product of Sansei Kakou) was used. The aqueous asphalt dispersion used was of 60% concentration.

### (Composition of mixture)

| | | |
|---|---|---|
| Aggregates | coarse aggregates | 45 wt. % |
| | fine aggregates | 44 wt. % |
| Filler | pulverized limestone (stone powder) | 3 wt. % |
| | slaked lime | 1 wt. % |
| | cement | 1 wt. % |
| Aqueous asphalt dispersion | | 10 wt. % |
| | | ( 6 wt. % point thereof was solid) |
| Total | | 100 wt. % |

### (Process for producing the mixture)

The mixture of the above-described composition was produced in the same manner as in Comparison 1.

### (Shipment and application of the mixture)

The thus-obtained mixture was shipped and applied in the same manner as in Comparison 1.

### (Evaluation of performance of pavement)

The surface of the pavement was evaluated in the same manner as in Comparison 1, and the results are shown in Table 1.

### (Evaluation of properties of the mixture)

The thus-produced mixture was measured in respect of density, void content, voids filled with asphalt, stability and flow value according to the Marshall stability test as was measured in Comparison 1, and the results are shown in Table 2.

### (Evaluation of CO₂ inhibiting effect)

The results of the evaluation are shown in Table 3.

### Comparison 1a

The following were used as the raw materials of the mixture:
① Aggregates: The aggregates of the same composition as used in Comparison 1 were heated to 80°C and dried by use of a heavy oil burner and a drier
② Filler: Crushed stone powder, slaked lime and cement were used.
③ Asphalt group: The aqueous asphalt dispersion (Alfa-Sol-4, product of Sansei Kakou) was used. The aqueous asphalt dispersion used was of 60% concentration (same as Example 1).

### (Composition of mixture)

| | | |
|---|---|---|
| Aggregates: | coarse aggregates | 45 wt. % |
| | fine aggregates | 44 wt. % |
| Filler: | pulverized limestone (stone powder) | 3 wt. % |
| | slaked lime | 1 wt. % |
| | cement | 1 wt. % |
| Aqueous asphalt dispersion: | | 10 wt. % |
| | | (6wt. % point thereof was solid) |
| Total | | 100 wt. % |

### (Process for producing the mixture)

The mixture of the above-described composition was produced in the same manner as in Comparison 1.

### (Shipment and application of the mixture)

The thus-obtained mixture was shipped and applied in the same manner as in Comparison 1.

### (Evaluation of performance of pavement)

The surface of the pavement was evaluated in the same manner as in Comparison 1, and the results are shown in Table 1.

### (Evaluation of properties of the mixture)

The thus-produced mixture was measured in respect of density, void content, voids filled with asphalt, stability and flow value according to the Marshall stability test as was measured in Comparison 1, and the results are shown in Table 2.

### (Evaluation of CO₂ inhibiting effect)

The results of the evaluation are shown in Table 3.

**Table 1**

| Appearance Evaluation | Evaluation | | |
|---|---|---|---|
| | Comparison 1 | Example 1 | Comp. 1a |
| Softening during rainy days | ⓞ | ⓞ | ⓞ |
| Crumbling during dry days | ○ | ⓞ | ⓞ |
| Flatness of road surface | ○ | ○ | ○ |
| Skid resistance | ○ | ○ | ○ |
| Lead time to putting into service | ⓞ | Δ | ○ |

**Table 2**

| | Comparison 1 | Example 1 | Comp. 1a |
|---|---|---|---|
| Density g/cm³ | 2.35 | 2.33 | 2.34 |
| Void content % | 3.5 | 4.0 | 3.7 |
| Voids filled with asphalt % | 75 | 70 | 72 |
| Stability kg | 820 | 750 | 800 |
| Flow value 1/100cm | 25 | 23 | 25 |

**Table 3**

| | | |
|---|---|---|
| Comparison 1 | CO₂ generation | 100% |
| Example 1 | CO₂ generation | 0% |
| Comparison 1a | CO₂ generation | 44% |

### Comparison 2 (Drainage pavement)

### (Raw materials of mixture)

The following ① aggregates, ② filler and ③ asphalt group were used as raw materials of the mixture:
① Aggregates: The aggregates of the same composition with Comparison 1 were heated to 155°C and dried in the same manner as in Comparison 1:
② Filler: Crushed stone powder, slaked lime and cement were used as filler.
③ Asphalt group: As was in Comparison 1, straight asphalt with penetration of 60-80 was heated to 160°C and used as hot asphalt.

### (Composition of mixture)

| | | |
|---|---|---|
| Aggregates | coarse aggregates | 70 wt. % |
| | fine aggregates | 20 wt. % |
| Filler | pulverized limestone (stone powder) | 3 wt. % |
| | slaked lime | 1 wt. % |
| | cement | 1 wt. % |
| Hot asphalt | | 5 wt. % |
| Total | | 100 wt. % |

### ( Process for producing the mixture, and shipment and application thereof)

Same as Comparison 1.

### (Evaluation)

① Apearance evaluation of the pavement: The appearance was evaluated in the same manner as in Comparison 1, of which results are shown in Table 4:
② The thus-obtained mixture was measured in respect of density, void content, voids filled with asphalt, stability, flow value according to the Marshall stability test as was measured in Comparison 1, of which results are shown in Table 5.
③ Evaluation of CO₂ inhibiting effect: The results of the evaluation are shown in Table 6.

### Example 2 (Drainage pavement)

The following were used as the raw materials of the mixture:
① Aggregates: The aggregates of the same composition as used in Comparison 1 were used at ambient temperature without being preheated.
② Filler: Crushed stone powder, slaked lime and cement were used.
③ Asphalt: The aqueous asphalt dispersion (Alfa-Sol-4, product of Sansei Kakou) was used. The aqueous asphalt dispersion used was of 60% concentration.

### (Composition of mixture)

| | | |
|---|---|---|
| Aggregates: | coarse aggregates | 70 wt.% |
| | fine aggregates | 20wt. % |
| Filler: | pulverized limestone (stone powder) | 3 wt. % |
| | slaked lime | 1 wt. % |
| | cement | 1 wt. % |
| Aqueous asphalt dispersion | | 8 wt. % |
| (5 wt. % point thereof was solid) | | |
| Total | | 100 wt. % |

### (Process for producing the mixture)

The mixture of the above-described composition was produced in the same manner as in Comparison 1.

### (Shipment and application of the mixture)

The thus-obtained mixture was shipped and applied in the same manner as in Comparison 1.
① Evaluation of appearance of pavement:
The surface of the pavement was evaluated in the same manner as in Comparison 1, of which results are shown in Table 4.
② The thus-produced mixture was measured in respect of density, void content, voids filled with asphalt, stability and flow value according to the Marshall stability test as was measured in Comparison 1, of which results are shown in Table 5.
④ Evaluation of CO₂ inhibiting effect: The results of the evaluation are shown in Table 6.

**Table 4**

| Appearance Evaluation | Evaluation | |
|---|---|---|
| | Comparison 2 | Example 2 |
| Softening during rainy days | ○ | ⓞ |
| Crumbling during dry days | ○ | ⓞ |
| Flatness of road surface | ○ | ○ |
| Skid resistance | ○ | ○ |
| Lead time to putting into service | ⓞ | ○ |

**Table 5**

| | Comparison 2 | Example 2 |
|---|---|---|
| Density g/cm³ | 2.20 | 2.22 |
| Void content % | 18.5 | 18.0 |
| Voids filled with asphalt % | 50 | 51 |
| Stability kg | 450 | 470 |
| Flow value 1/100cm | 30 | 32 |

**Table 6**

| | | |
|---|---|---|
| Comparison 2 | CO₂ generation | 100% |
| Example 2 | CO₂ generation | 0% |

### Comparison 3 (Pavement using recycled aggregates)

The following ① aggregates, ② filler and ③ asphalt group were used as raw materials of the mixture:
① Aggregates: The recycled aggregates, after crushed into pieces as small as max. 40mm diameter by use of a crusher, were heated to 155°C and dried in the same manner as in Comparison 1:
② Filler: Crushed stone powder, slaked lime and cement were used as filler.
③ Asphalt group: As was in Comparison 1, straight asphalt with penetration of 60-80 was heated to 160°C and used as hot asphalt.

### (Composition of mixture)

| | | |
|---|---|---|
| Aggregates | recycled aggregates | 91 wt. % |
| Filler | pulverized limestone (stone powder) | 3 wt. % |
| | slaked lime | 1 wt: % |
| | cement | 1 wt. % |
| Hot asphalt | | 4 wt. % |
| Total | | 100 wt. % |

### (Process for producing the mixture, and shipment and application thereof)

Same as Comparison 1.

### (Evaluation)

① Appearance evaluation of the pavement: The appearance was evaluated in the same manner as in Comparison 1, of which results are shown in Table 7:
② The thus-obtained mixture was measured in respect of density, void content, voids filled with asphalt, stability, flow value according to the Marshall stability test as was measured in Comparison 1, of which results are shown in Table 8.
③ Evaluation of CO₂ inhibiting effect: The results of the evaluation are shown in Table 9.

### Example 3 (pavement using recycled aggregates)

The following were used as the raw materials of the mixture:
① Aggregates: the same recycled aggregates as used in Composition 3 were used at ambient temperature without being preheated.
② Filler: crushed stone powder, slaked lime and cement were used.
③ Asphalt group: the aqueous asphalt dispersion (Alfa-Sol-4, product of Sansei Kakou) was used. The aqueous asphalt dispersion used was of 60% concentration.

### (Composition of mixture)

| | | |
|---|---|---|
| Aggregates | recycled aggregates | 91 wt. % |
| Filler | pulverized limestone (stone powder) | 3 wt. % |
| | slaked lime | 1 wt. % |
| | cement | 1 wt. % |
| Aqueous asphalt dispersion | | 7 wt. % |
| (4 wt. % point thereof was solid) | | |
| Total | | 100 wt. % |

### (Process for producing the mixture)

The mixture of the above-described composition was produced in the same manner as in Comparison 1.

### (Shipment and application of the mixture)

The thus-obtained mixture was shipped and applied in the same manner as in Comparison 1.

### (Evaluation)

① Evaluation of appearance of pavement: The surface of the pavement was evaluated in the same manner as in Comparison 1, of which results are shown in Table 7.
② The thus-produced mixture was measured in respect of density, void content, voids filled with asphalt, stability and flow value according to the Marshall stability test as was measured in Comparison 1, of which results are shown in Table 8.
⑤ Evaluation of CO₂ inhibiting effect: The results of the evaluation are shown in Table 9.

**Table 7**

| Appearance Evaluation | Evaluation | |
|---|---|---|
| | Comparison 3 | Example 3 |
| Softening during rainy days | ⓞ | ⓞ |
| Crumbling during dry days | ○ | ⓞ |
| Flatness of road surface | ○ | ○ |
| Skid resistance | ○ | ○ |
| Lead time to putting into service | ⓞ | ○ |

**Table 8**

| | Comparison 3 | Example 3 |
|---|---|---|
| Density g/cm³ | 2.32 | 2.33 |
| Void content % | 4.1 | 3.7 |
| Voids filled with asphalt % | 74 | 75 |
| Stability kg | 720 | 760 |
| Flow value 1/100cm | 25 | 25 |

**Table 9**

| | | |
|---|---|---|
| Comparison 3 | CO₂ generation | 100% |
| Example 3 | CO₂ generation | 0% |

## Claims

1. A process for producing a mixture for asphalt pavement by way of mixing aggregates (1), filler (4) and asphalt group, which comprises:
feeding said aggregates (1) to a mixer (3) under exclusion of preheating and
using an aqueous asphalt dispersion (6) comprising asphalt and poval as said asphalt group.

2. A process for producing a mixture for asphalt pavement according to claim 1, wherein the aqueous asphalt dispersion (6) comprises asphalt serving as raw material, which is melted in advance so as to assume a liquid state, and an aqueous poval solution.

3. A process for producing a mixture for asphalt pavement according to claim 2, wherein the aqueous asphalt dispersion (6) is produced by way of feeding an asphalt serving as a raw material, which is melted in advance so as to assume a liquid state, and an aqueous poval solution to a predetermined space in a mixing apparatus (3), which space is defined by a rotational body (10) and a non-rotational body (11) or two rotational bodies (10) of the apparatus (3), and rotating the rotational body (10) at high speed to thereby produce the aqueous asphalt dispersion (6).

4. A process for producing a mixture for asphalt pavement according to either of claim 1 to 3, wherein poval is added at the rate of 0.5 - 5 wt. % to the asphalt with the amounts of both poval and asphalt being on a solid basis.

5. A process for producing a mixture for asphalt pavement according to either of claim 1 to 4, wherein the concentration of the solid portion of the aqueous dispersion (6) is in the range of 35 -75 wt.%.

6. A process for producing a mixture for asphalt pavement according to either of claim 1 to 5, wherein the aggregates (1) comprise natural or artificial gravel, crashed rock, coarse sand or recycled asphalt-concrete aggregates.

7. A process for producing a mixture for asphalt pavement according to either of claim 1 to 6, wherein the filler (4) includes, at least, crushed stone powder and cement, and, if necessary, quick lime or slaked lime.

8. A process for producing a mixture for asphalt pavement according to either of claim 1 to 7, wherein the aggregates (1) and filler (4) are mixed by means of the aqueous asphalt dispersion (6), then combined with hot asphalt.

## Patentansprüche

1. Ein Verfahren zur Herstellung einer Asphaltstraßenpflaster-Mischung durch Mischen von Zuschlagstoffen (1), Füllstoff (4) und Asphaltgruppe, welches umfasst:
Zuführung besagter Zuschlagstoffe (1) in einen Mischer (3) unter Ausschluss einer Vorerwärmung und
Verwendung einer wässrigen Asphalt-Dispersion (6), welche Asphalt und POVAL als besagte Asphaltgruppe umfasst.

2. Ein Verfahren zur Herstellung einer Asphaltstraßenpflaster-Mischung nach Anspruch 1, wobei die wässrige Asphalt-Dispersion (6) Asphalt dienend als Rohmaterial, welches im Voraus geschmolzen wurde, so dass es einen flüssigen Zustand annimmt, und eine wässrige POVAL Lösung umfasst.,

3. Ein Verfahren zur Herstellung einer Asphaltstraßenpflaster-Mischung nach Anspruch 2, wobei die wässrige Asphalt-Dispersion (6) hergestellt wird durch Zugabe eines Asphaltes dienend als Rohmaterial, welches im Voraus geschmolzen wurde, so dass es einen flüssigen Zustand annimmt, und einer wässrigen POVAL Lösung in einen vorbestimmten Raum in einer Mischvorrichtung (3), wobei der Raum definiert ist durch einen rotierenden Körper (10) und einen nicht-rotierenden Körper (11) oder zwei rotierende Körper (10) der Vorrichtung (3), und Drehung des rotierenden Körpers (10) mit hoher Geschwindigkeit, um dabei die wässrige Asphalt-Dispersion (6) herzustellen.

4. Ein Verfahren zur Herstellung einer Asphaltstraßenpflaster-Mischung nach einem der Ansprüche 1 bis 3, wobei POVAL in einem Verhältnis von 0,5 - 5 Gew.% dem Asphalt mit den Mengen sowohl an POVAL als auch an Asphalt auf einer Feststoffbasis zugegeben wird.

5. Ein Verfahren zur Herstellung einer Asphaltstraßenpflaster-Mischung nach einem der Ansprüche 1 bis 4, wobei die Konzentration des Feststoff-Anteils der wässrigen Dispersion (6) im Bereich von 35 - 75 Gew.% liegt.

6. Ein Verfahren zur Herstellung einer Asphaltstraßenpflaster-Mischung nach einem der Ansprüche 1 bis 5, wobei die Zuschlagstoffe (1) natürlichen oder künstlichen Kies, zerkleinertes Gestein, Grobsand oder wieder aufbereitete Asphalt-Beton-Zuschlagstoffe umfassen.

7. Ein Verfahren zur Herstellung einer Asphaltstraßenpflaster-Mischung nach einem der Ansprüche 1 bis 6, wobei der Füllstoff (4) zumindest Schotter-Mehl und Zement enthält und, wenn nötig, Branntkalk oder gelöschten Kalk.

8. Ein Verfahren zur Herstellung einer Asphaltstraßenpflaster-Mischung nach einem der Ansprüche 1 bis 7, wobei die Zuschlagstoffe (1) und Füllstoff (4) durch die wässrige Asphalt-Dispersion (6) gemischt und dann mit heissem Asphalt vereinigt werden.

## Revendications

1. Procédé de fabrication d'un mélange pour revêtement bitumineux en mélangeant des granulats (1), du matériau de charge (4) et du mélange asphaltique, comprenant :
mise des susdits granulats (1) dans un malaxeur (3) en excluant tout préchauffage et
emploi d'une dispersion aqueuse de bitume (6) comprenant du bitume et du Poval comme susdit mélange asphaltique.

2. Procédé de fabrication d'un mélange pour revêtement bitumineux selon la revendication 1, où la dispersion aqueuse de bitume (6) comprend du bitume servant de matériau amorphe lequel est fondu à l'avance de manière à atteindre un état liquide, et une solution aqueuse de Poval.

3. Procédé de fabrication d'un mélange pour revêtement bitumineux selon la revendication 2, où la dispersion aqueuse de bitume (6) est produite en mettant du bitume servant de matériau amorphe, lequel est fondu à l'avance de manière à atteindre un état liquide, et une solution aqueuse de Poval dans un espace prédéterminé dans un malaxeur (3), lequel espace est défini par un corps rotatif (10) et un corps non rotatif (11) ou par deux corps rotatifs (10) de l'appareil (3), et en faisant tourner le corps rotatif (10) à grande vitesse afin de produire ainsi la dispersion aqueuse de bitume (6).

4. Procédé de fabrication d'un mélange pour revêtement bitumineux selon l'une quelconque des revendications 1 à 3, où du Poval est ajouté au bitume dans une proportion de 0,5 à 5 % par poids avec les quantités de bitume et de Poval ayant une base solide.

5. Procédé de fabrication d'un mélange pour revêtement bitumineux selon l'une quelconque des revendications 1 à 4, où la concentration de la portion solide de la dispersion aqueuse (6) se trouve dans une fourchette de 35 à 75 % par poids.

6. Procédé de fabrication d'un mélange pour revêtement bitumineux selon l'une quelconque des revendications 1 à 5, où les granulats (1) comprennent du gravier artificiel ou naturel, de la roche écrasée, du sable moyen ou des granulats de béton bitumineux recyclés.

7. Procédé de fabrication d'un mélange pour revêtement bitumineux selon l'une quelconque des revendications 1 à 6, où le matériau de charge (4) présente, au minimum, de la poudre de roche écrasée et du ciment, et, si nécessaire, de la chaux vive ou de la chaux éteinte.

8. Procédé de fabrication d'un mélange pour revêtement bitumineux selon l'une quelconque des revendications 1 à 7, où les granulats (1) et le matériau de charge (4) sont mélangés au moyen de la dispersion aqueuse de bitume (6), puis combinés avec le bitume chaud.
